# EUROPEAN PATENT SPECIFICATION

(11) **EP 0 826 483 B1**
(45) Date of publication and mention of the grant of the patent: **24.10.2001**
(21) Application number: 96306237.7
(22) Date of filing: 28.08.1996
(51) Int. Cl.: B29D 22/00, B29C 65/20, F17C 1/16

(54) **Fitting installation process and apparatus for a molded plastic vessel**
Verfahren und Vorrichtung zum Befestigen eines Anschlusstückes auf einem geformten Kunststoffbehälter
Procédé et appareil pour la fixation d'un embout sur un conteneur en matière plastique moulé

(43) Date of publication of application: 04.03.1998
(73) Proprietor: ESSEF Corporation, Chardon, OH 44024 (US)
(72) Inventor: Murphy, James C., Chardon, Ohio 44024 (US); Hlebovy, Jim, Chardon, Ohio 44024 (US); Goodge, Kevin, Chardon, Ohio 44024 (US)
(74) Representative: Lynd, Michael Arthur

(56) References cited:
- WO-A-96/00142
- DE-A- 3 537 670
- FR-A- 2 664 529
- GB-A- 2 186 524
- US-A- 3 929 541
- US-A- 4 238 131
- US-A- 4 685 589
- US-A- 4 740 262
- US-A- 4 785 956
- US-A- 4 872 935
- US-A- 5 006 197
- US-A- 5 232 528
- PATENT ABSTRACTS OF JAPAN vol. 009, no. 063 (M-365), 20 March 1985 & JP 59 196214 A (MIYAKO FURUKAWA), 7 November 1984,
- PATENT ABSTRACTS OF JAPAN vol. 013, no. 077 (M-801), 22 February 1989 & JP 63 278821 A (IZUMI KOGYO KK), 16 November 1988,

## Description

This invention relates generally to the field of plastic vessels and specifically to a process for installing a fitting on such a vessel.

Molded vessels have numerous applications for containing fluids. The vessels are made by any of several plastic forming processes, including rotational molding and blow molding. Many of the fluids are contained at high pressure. Therefore, the vessels are reinforced by filaments wound on the outer surface of the vessel, as described, for example, in U.S. Patents Nos. 3,945,578 to Kaminsky and 5,012,950 to Knappe.

Such vessels need one, and frequently several, ports for filling or emptying the vessel. The ports are commonly provided as a rigid fitting adapted to connect to a hose or pipe. Such fittings can be provided during the molding process. For example, a metal fitting can be held in the mold and the plastic molded around the fitting. This method, however, cannot be used to add a fitting after molding. Moreover, reconfiguring a mold is costly, thus, fittings cannot be located at different locations based on specified applications. U.S. Patent No. 4,685,589 to Benton describes one way of installing a fitting after molding and before winding a vessel. An elastic seal is disposed between the fitting and the vessel.

U.S. Patent No. 5 006 197 describes a system for fusion bonding several attachments to a relatively large and bulky thermoplastic article which employs means for fixedly securing the article, and a movable fixture selectively positionable relative to the thermoplastic article, however there is no disclosure or suggestion of a method as set out in claim 1 herein.

Still, the need remains for a method of fabricating a fitting that allows the fitting to be located after molding of the vessel. The fitting should be firmly secured on the vessel and bonded therewith prior to winding.

The present invention provides a method of manufacturing a fluid-containing vessel having a fitting, comprising the steps of:
forming a liner defining the vessel;
providing a preformed fitting;
installing an insert in the fitting the insert comprising means for engaging
the fitting to firmly secure the fitting on the liner and bond it therewith;
positioning the fitting on a wall of the liner; and
welding the insert to the wall.

Preferably, the fitting defines a passage therethrough, and the insert is installed in the passage. The insert preferably has a flange that engages the fitting to retain the fitting on the liner. The passage preferably communicates with an interior of the liner through the hole. When the liner and insert are made of materials having substantially similar melting temperatures, they are preferably heated to about the same temperature. When the liner and insert have different melting temperatures, they are preferably heated to different temperatures. The liner and insert are made of plastic materials compatible for welding to each other. The liner may be generally cylindrical, and the fitting may be located on a generally cylindrical side wall of the liner. The step of welding may include heating the insert and an area of the liner and pressing the insert into the liner to bond therewith.

According to one aspect of the invention, the method includes rotationally molding the liner of plastic material having a generally cylindrical shape. The fitting is preformed with the flange and passage therethrough. The insert, of the same material as the liner, is installed in the passage of the fitting, and the insert flange engages the fitting. Heating the insert and an area of the cylindrical wall of the liner where the fitting is to be installed softens the fitting and the area of the wall. The flange of the fitting is installed on the area of the wall and the insert is pressed into the area so as to bond the insert to the wall. Filament winding of the liner captures the fitting flange against the wall. Cutting a hole through the wall of the liner inside the fitting creates a port through the passage.

The invention also provides an apparatus for installing a fitting on a molded vessel liner. The apparatus includes means for supporting the fitting and an insert near the liner; a heater; means for positioning the heater between the fitting and the liner for heating the insert and an area of the liner; and means for positioning the fitting on the liner and pressing the insert into the liner to weld the insert to the liner.

According to a preferred aspect of the invention, the apparatus for installing the fitting on the molded vessel liner includes a platform. A mounting head is movably mounted on the platform and adapted for supporting the fitting and the insert near the liner, positioning the fitting on the liner, and pressing the insert into the liner. A driver is adapted to move the mounting head. A heat mirror is movably mounted on the platform on a support arm having the heat mirror pivotably mounted thereon. The support arm is adapted for positioning the heater between the fitting and the liner.
Fig. 1 shows a partially exploded side elevational view of an apparatus for installing a fitting on a liner and a partial end view of the liner;
Fig. 2 shows a top view of the apparatus, assembled fitting, and liner of Fig. 1; and
Fig. 3 shows an isometric view of the wound vessel with the fitting installed thereon.

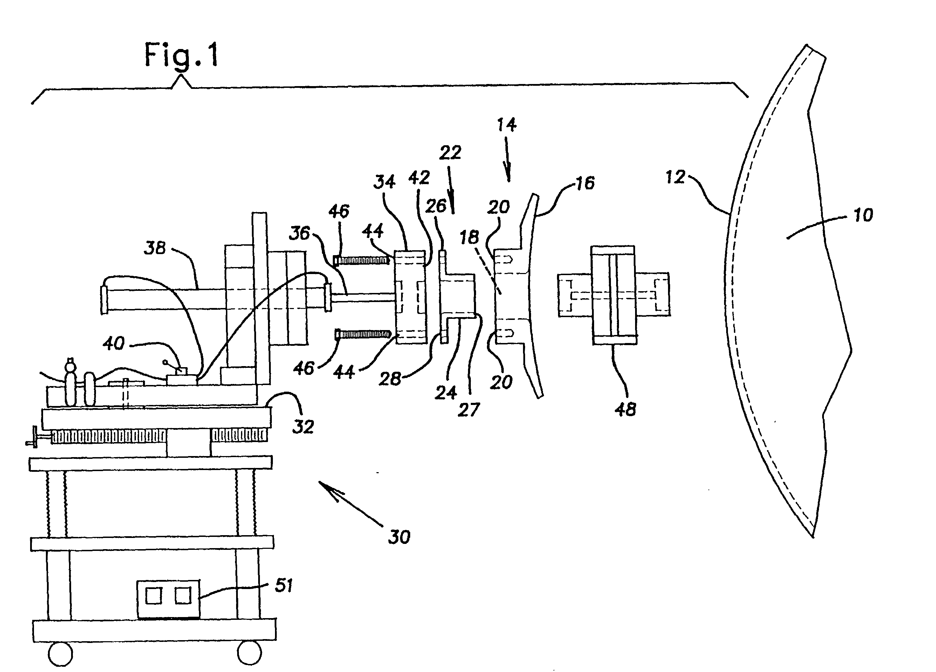

Referring to Fig. 1, a molded tank liner 10 for a vessel is made from a suitable polymer, such as polyethylene, by rotational molding, blow molding, or the like. The liner 10 is conventional and can have any of a number of shapes and constructions including a side wall 12 that defines an internal volume.

A fitting 14 has a flange 16 and a cylindrical passage 18 therethrough. The fitting is made of metal, a composite, sheet molding compound, bulk molding compound or other suitable durable material. The fitting 14 can be threaded or otherwise suitable for connecting to another fitting or a conduit. A pair of threaded bores 20 are provided in a face of the fitting 14. An insert 22 has a cylindrical body 24 adapted to fit in the cylindrical passage 18 of the fitting 14. The insert 22 is preferably molded from a material compatible with the liner 10 and adapted to be bonded therewith by welding, such as polyethylene. The insert 22 is provided with an annular flange 26 for preventing the insert from passing through the passage 18 of the fitting 14. The body defines an edge 27 adapted to be flush with or extend slightly from the flange 16 of the fitting 12. A pair of holes 28 corresponding with the threaded bores 20 are provided through the flange 26.

An installation apparatus 30 is adapted to be located near the liner 10 and includes a vertically and laterally adjustable platform 32. The platform is adjustable by manual or powered devices, such as cranks and threaded shafts. A horizontally movable mounting head 34 is supported on a horizontal shaft 36 of a driver, such as a hydraulic or pneumatic cylinder 38, mounted to the platform 32. The cylinder 38 is powered by fluid controlled by a head controller 40.

The mounting head 34 has a front face 42 adapted to engage the flange 26 of the insert 22. A pair of holes 44 corresponding with the insert holes 28 are provided through the head 34. A pair of bolts 46 are installed through the holes 44, 28 and threaded into the bores 20 to mount the fitting 14 and insert 22 on the mounting head 34. Alternatively, the fitting 14 can be mounted on the head 34 by a clamp or other suitable mounting means. The fitting 14 is firmly mounted so that the insert flange 26 engages the fitting 14.

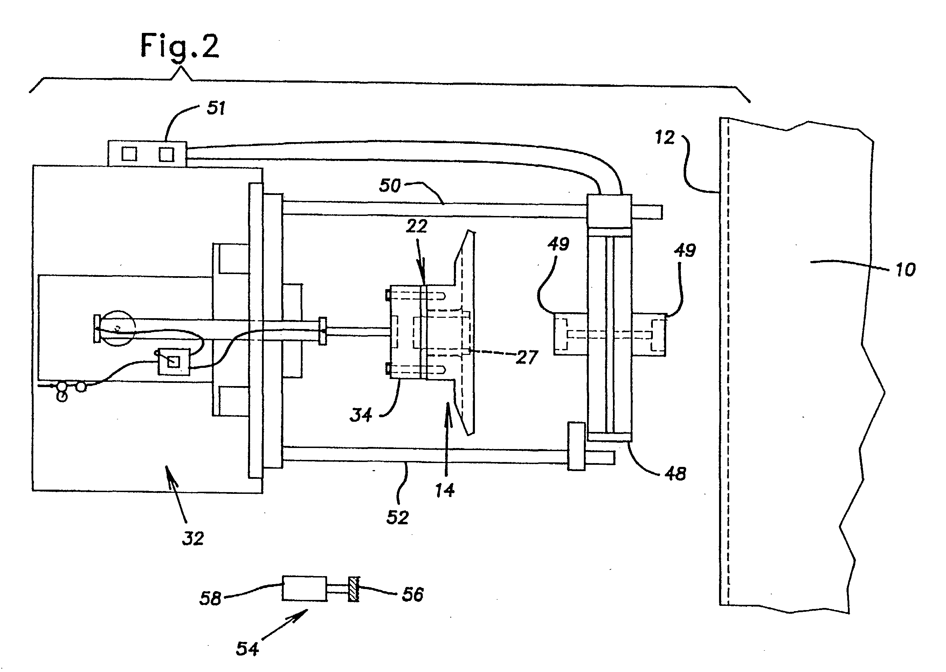

Referring to Fig. 2, a heater 48, such as a two sided heat mirror, is disposable between the mounting head 34 and the liner 10. A pair of heating spigots 49 conforming to the wall 12 and insert 22 direct and focus heat emanating from the heater 48. Alternatively, the heater can be two separate one-sided heat mirrors or other heating means. The heater can be hand held or supported on a suitable stationary or movable structure. The two sides of the heater 48 are separately controlled by a heater control 51. Preferably, the heater 48 is carried on the platform 32 by a pivotable support arm 50 and a brace arm 52. The support arm 50 is adapted to pivot, thereby moving the heater 48 to a vertical position providing clearance for the head 34 to move the fitting 14 toward the liner 10. In a horizontal position shown, the heater 48 is held at a constant level and prevented from shifting by the brace arm 52. A rotary grinder 54 having a cutting tool 56 powered by a motor 58 is provided on the platform 32 or separately therefrom. A hand held grinder 54 is suitable.

In operation, referring to Figs. 1 and 2, the installation apparatus 30 is located near the previously molded liner 10. The heater 48 is moved to its horizontal position and located proximate to a location on the liner 10 where the fitting 14 is to be installed. The mounting head 34 is moved to a retracted position away from the heater 48. The insert 22 is installed in the passage 18 of the fitting 14 so that the insert flange 26 engages the fitting 14. The fitting 14 and insert 22 are mounted on the mounting head 34 with the bolts 46. The head 34, insert 22 and fitting 14 are moved to an intermediate position wherein the flange 16 of the fitting 14 and edge 27 of the insert are proximate to the heater 48.

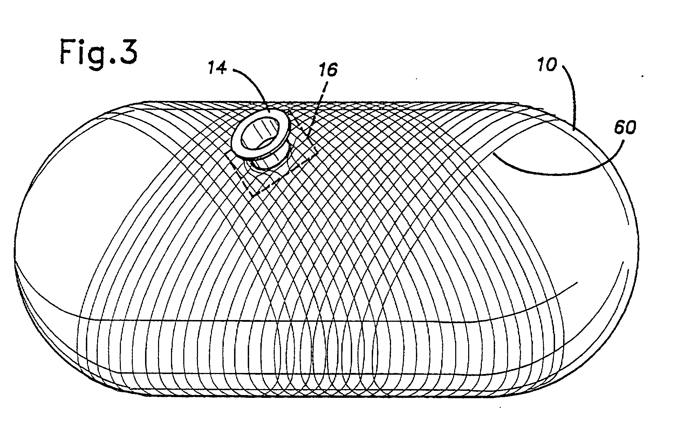

The heater 48 is activated to heat the edge 27 of the insert 22 and an area of the wall 12 of the liner 10. The edge 27 and wall 12 are softened or melted to a point at which they can be bonded together. The heater 48 is automatically or manually controllable to properly heat the edge 27 and wall 12. The heat required depends on the materials. Opposite sides of the heater 48 can be separately controlled to provide the proper temperature for different insert 22 and liner 10 materials. If the application allows, the heater can be automatically controlled to provide adequate heating for successive liners and fittings. The heater 48 is deactivated and the support arm 50 is pivoted to move the heater 48 to its vertical position. The mounting head 34 is moved to an extended position wherein the flange 16 is pressed against the wall 12 and the insert 22 is welded to the wall 12. The fitting 14 is held against the wall under pressure from the cylinder 38 for a sufficient time to bond the insert 22 to the wall 12. The time and pressure depend on the materials and will be apparent to one skilled in the art of plastics. The fitting 14 is held in place without pressure until the insert 22 and wall 12 have cooled sufficiently to hold the fitting 14. The mounting head 34 is separated from the insert 22 and fitting 14, by removing the bolts 46, and the mounting head 34 is retracted. The grinder 54 is then used to remove the portion of the wall 12 inside the insert 22 to cut or grind open the interior of the liner 10 and place the interior of the liner in communication with the passage 18. Finally the liner is filament 60 wound in a conventional manner, as shown in Fig. 3. The filaments 60 pass over and capture the flange 16 of the fitting to securely hold the fitting on the liner 10. If it is necessary to entirely remove the insert 22, the liner 10 should be filament wound prior to grinding or cutting out the insert 22 and portion of the wall 12. The fitting 14 is then suitable for connecting conduits to the vessel.

The present disclosure describes several embodiments of the invention, however, the invention is not limited to these embodiments. For example, other devices and fittings, such as sight gauges, flanges, etc. can be installed on other vessels according to the present invention. Other variations are contemplated to be within the scope of the appended claims.

## Claims

1. A method of manufacturing a fluid-containing vessel having a fitting, comprising the steps of:
forming a liner (10) defining the vessel;
providing a preformed fitting (14);
installing an insert (22) in the fitting the insert (22) comprising means (26) for engaging the fitting to firmly secure the fitting on the liner and bond it therewith;
positioning the fitting (14) on a wall (12) of the liner (10; and
welding the insert (22) to the wall.

2. A method according to claim 1, further comprising the step of filament winding the liner (10), said filaments capturing the fitting against the wall.

3. A method according to claim 1 or 2, further comprising the step of cutting a hole through the wall (12) of the liner (10) inside the fitting (14) to create a passage through the fitting and the liner wall.

4. A method according to claim 2, wherein the fitting (14) defines a passage (18) therethrough, and said insert (22) is installed in the passage.

5. A method according to claim 4, wherein the insert (22) has a flange (26) that is engaged with the fitting (14) to retain the fitting on the liner (10).

6. A method according to claim 4 or 5, wherein the passage (18) is placed communication with an interior of the liner (10) through the hole.

7. A method according to claim 1, wherein the insert (22) is engaged with the fitting (14) to retain the fitting on the lines (10).

8. A method according to any one of the preceding claims, wherein the liner (10) and insert (22) are made of materials having substantially similar melting temperatures and the step of welding includes heating an area of the liner and insert to about the same temperature.

9. A method according to any one of claims 1 to 7, wherein the liner (10) and insert (22) are made of materials having substantially different melting temperatures and the step of welding includes heating an area of the liner (10) and insert (22) to different temperatures.

10. A method according to any one of the preceding claims, wherein the liner (10) and insert (22) are made of plastic.

11. A method according to any one of the preceding claims, wherein the liner (10) is generally cylindrical.

12. A method according to claim 11, wherein the fitting (14) is installed on a generally cylindrical side wall (12) of the liner.

13. A method according to any one of the preceding claims, wherein the step of welding includes heating the insert (22) and an area of the liner (10) and pressing the insert into the liner to bond therewith.

14. A method of manufacturing a fluid-containing vessel having a fitting, comprising the steps of:
forming a liner (10) defining the vessel;
providing a preformed fitting (14) having a flange (16);
installing an insert (22) having a flange (26) in the fitting (14), said insert flange (26) engaging the fitting (14);
positioning the fitting (14) on a wall (12) of the liner (10) and welding the insert (22) to the wall, the insert flange (26) retaining the fitting to firmly secure the fitting on the liner and bond it therewith;
filament winding the liner (10), said filaments capturing the fitting flange (16) against the wall; and
cutting a hole through the wall (12) of the liner (10) inside the fitting (14) to create a port through the fitting.

15. A method of manufacturing a fluid-containing vessel having a port, comprising the steps of:
rotationally molding a liner (10) of plastic material having a generally cylindrical shape;
providing a preformed fitting (14) having a flange (16) and a passage therethrough;
installing an insert (22) of the same material as the liner (10) in the passage of the fitting (14), said insert having a flange (26) engaging the fitting;
heating the insert (22) and an area of a cylindrical wall (12) of the liner (10) where the fitting is to be installed to soften the insert and the area of the wall;
locating the flange (16) of the fitting on the area of the wall and pressing the insert (22) into the area so as to bond the insert to the wall, the insert flange (26) retaining the fitting to firmly secure the fitting on the liner and bond it therewith;
filament winding the liner, said filaments capturing the fitting flange (16) against the wall; and
cutting a hole through the wall of the liner (10) inside the fitting to create a port through the passage.

16. An apparatus for installing a fitting (14) on a molded vessel liner (10), comprising:
means for supporting the fitting (14) and an insert (22) near the liner;
a heater (48);
means (50) for positioning the heater between the fitting (14) and the liner (10) for heating the insert (22) and an area of the liner; and
means (34,38) for positioning the fitting (14) on the liner and pressing the insert into the liner to weld the insert to the liner, **characterised in that** the insert (22) comprises means (26) for engaging the fitting (14) to firmly secure the fitting on the liner and bond it therewith.

17. An apparatus according to claim 16, further comprising means (54) for removing material of the liner to place an interior of the vessel in communication with the fitting.

18. An apparatus according to claim 16 or 17, wherein the means for supporting the fitting (14) and insert (22) and the means for positioning the fitting (14) comprises a movable mounting head (34).

19. An apparatus according to claim 18, further comprising a powered driver (38) for moving the mounting head (34).

20. An apparatus according to any one of claims 16 to 19, wherein the heater (48) comprises a two sided heat mirror.

21. An apparatus according to claim 20, wherein the two sides of the heat mirror are separately controllable.

22. An apparatus according to any one of claims 16 to 21, wherein the means (50) for positioning the heater (48) comprises a support arm on which the heater is pivotably mounted.

23. An apparatus for installing a fitting (14) on a molded vessel liner (10), comprising:
a platform (32);
a mounting head (34) movably mounted on the platform and adapted for supporting the fitting (14) and an insert (22) the insert comprising means (26) for engaging the fitting (14) to firmly secure the fitting on the liner and bond it therewith, near the liner, positioning the fitting on the liner, and pressing the insert into the liner;
a driver (38) adapted to move the mounting head (34);
a heat mirror (48) movably mounted on the platform; and
a support arm (50) having the heat mirror pivotably mounted thereon and adapted for positioning the heater between the fitting and the liner.

## Patentansprüche

1. Verfahren zur Herstellung eines Fluid enthaltenden Behälters mit einem Anschlußstück, bei dem man:
einen den Behälter definierende Liner (10) bildet;
ein vorgeformtes Anschlußstück (14) bereitstellt;
im Anschlußstück einen Einsatz (22) installiert, der ein Mittel (26) zur Ineingriffnahme des Anschlußstücks zur sicheren Befestigung des Anschlußstücks an dem Liner und seiner Verbindung mit diesem umfaßt;
das Anschlußstück (14) an einer Wand (12) des Liners (10) anordnet und den Einsatz (22) mit der Wand verschweißt.

2. Verfahren nach Anspruch 1, bei dem man weiterhin den Liner (10) mit Fasern umwickelt, wobei die Fasern das Anschlußstück an der Wand festhalten.

3. Verfahren nach Anspruch 1 oder 2, bei dem man weiterhin durch die Wand (12) des Liners (10) innerhalb des Anschlußstücks (14) ein Loch schneidet, um durch das Anschlußstück und die Linerwand einen Durchgang zu schaffen.

4. Verfahren nach Anspruch 2, bei dem im Anschlußstück (14) ein Durchgang (18) definiert ist und der Einsatz (22) in dem Durchgang installiert wird.

5. Verfahren nach Anspruch 4, bei dem der Einsatz (22) einen Flansch (26) aufweist, der mit dem Anschlußstück (14) in Eingriff gebracht wird und dieses so an dem Liner (10) festhält.

6. Verfahren nach Anspruch 4 oder 5, bei dem durch das Loch eine Verbindung zwischen dem Durchgang (18) und dem Inneren des Liners (10) hergestellt wird.

7. Verfahren nach Anspruch 1, bei dem der Einsatz (22) mit dem Anschlußstück (14) in Eingriff gebracht wird und dieses so an dem Liner (10) festhält.

8. Verfahren nach einem der vorhergehenden Ansprüche; bei dem der Liner (10) und der Einsatz (22) aus Materialien hergestellt werden, die im wesentlichen ähnliche Schmelztemperaturen aufweisen, und man bei dem Verschweißen einen Bereich des Liners und des Einsatzes auf ungefähr die gleiche Temperatur erwärmt.

9. Verfahren nach einem der Ansprüche 1 bis 7, bei dem der Liner (10) und der Einsatz (22) aus Materialien hergestellt werden, die im wesentlichen unterschiedliche Schmelzpunkte aufweisen, und man bei dem Verschweißen einen Bereich des Liners (10) und des Einsatzes (22) auf verschiedene Temperaturen erwärmt.

10. Verfahren nach einem der vorhergehenden Ansprüche, bei dem der Liner (10) und der Einsatz (22) aus Kunststoff bestehen.

11. Verfahren nach einem der vorhergehenden Ansprüche, bei dem der Liner (10) allgemein zylindrisch ist.

12. Verfahren nach Anspruch 11, bei dem das Anschlußstück (14) an einer allgemein zylindrischen Seitenwand (12) des Liners installiert wird.

13. Verfahren nach einem der vorhergehenden Ansprüche, bei dem man bei dem Verschweißen den Einsatz (22) und einen Bereich des Liners (10) erwärmt und den Einsatz zur Verbindung mit dem Liner in diesen hineinpreßt.

14. Verfahren zur Herstellung eines Fluid enthaltenden Behälters mit einem Anschlußstück, bei dem man:
einen den Behälter definierende Liner (10) bildet;
ein einen Flansch (16) aufweisendes vorgeformtes Anschlußstück (14) bereitstellt;
im Anschlußstück (14) einen einen Flansch (26) aufweisenden Einsatz (22) installiert, wobei der Einsatzflansch (26) das Anschlußstück (14) in Eingriff nimmt;
das Anschlußstück (14) an einer Wand (12) des Liners (10) anordnet und den Einsatz (22) mit der Wand verschweißt, wobei der Einsatzflansch (26) das Anschlußstück sicher festhält und letzteres so an dem Liner befestigt und mit diesem verbindet;
den Liner mit Fasern umwickelt, wobei die Fasern den Anschlußstückflansch (16) an der Wand festhalten; und
durch die Wand (12) des Liners (10) innerhalb des Anschlußstücks (14) ein Loch schneidet und so durch das Anschlußstück einen Öffnungskanal ausbildet.

15. Verfahren zur Herstellung eines Fluid enthaltendes Behälters mit einem Öffnungskanal, bei dem man:
durch Rotationsformen einen Liner (10) aus Kunststoffmaterial mit einer allgemein zylindrischen Form herstellt;
ein vorgeformtes Anschlußstück (14) mit einem Flansch (16) und einem dort hindurch verlaufenden Durchgang bereitstellt;
einen Einsatz (22) aus dem gleichen Material wie der Liner (10) im Durchgang des Anschlußstücks (14) installiert, wobei der Einsatz einen das Anschlußstück in Eingriff nehmenden Flansch (26) aufweist;
den Einsatz (22) und einen Bereich einer zylindrischen Wand (12) des Liners (10), wo das Anschlußstück installiert werden soll, erwärmt, um den Einsatz und den Wandbereich zu erweichen;
den Flansch (16) des Anschlußstücks an dem Wandbereich anordnet und den Einsatz (22) in den Bereich hineinpreßt, so daß der Einsatz mit der Wand verbunden wird, wobei der Einsatzflansch (26) das Anschlußstück festhält, damit dieses sicher an dem Liner befestigt und damit verbunden wird;
den Liner mit Fasern umwickelt, wobei die Fasern den Anschlußstückflansch (16) an der Wand festhalten; und
durch die Wand des Liners (10) innerhalb des Anschlußstücks ein Loch schneidet und so durch den Durchgang einen Öffnungskanal ausbildet.

16. Vorrichtung zum Installieren eines Anschlußstücks (14) an einem geformten Behälterliner (10), die folgendes umfaßt:
ein Mittel zum Stützen des Anschlußstücks (14) und eines Einsatzes (22) in der Nähe des Liners;
eine Heizvorrichtung (48);
ein Mittel (50) zur Positionierung der Heizvorrichtung zwischen dem Anschlußstück (14) und dem Liner (10) zur Erwärmung des Einsatzes (22) und eines Bereichs des Liners; und
ein Mittel (34, 38) zur Positionierung des Anschlußstücks (14) an dem Liner und zum Hineinpressen des Einsatzes in den Liner zur Verschweißung des Einsatzes mit dem Liner, **dadurch gekennzeichnet, daß** der Einsatz (22) ein Mittel (26) zur Ineingriffnahme des Anschlußstücks (14) zur sicheren Befestigung des Anschlußstücks an dem Liner und Verbindung mit diesem umfaßt.

17. Vorrichtung nach Anspruch 16, weiterhin mit einem Mittel (54) zur Entfernung von Material des Liners zur Verbindung des Behälterinneren mit dem Anschlußstück.

18. Vorrichtung nach Anspruch 16 oder 17, bei der das Mittel zum Stützen des Anschlußstücks (14) und des Einsatzes (22) und das Mittel zur Positionierung des Anschlußstücks (14) einen beweglichen Montagekopf (34) umfassen.

19. Vorrichtung nach Anspruch 18, weiterhin mit einem angetriebenen Treiber (38) zur Bewegung des Montagekopfs (34).

20. Vorrichtung nach einem der Ansprüche 16 bis 19, bei der die Heizvorrichtung (48) einen zweiseitigen Heizspiegel umfaßt.

21. Vorrichtung nach Anspruch 20, bei der die beiden Seiten des Heizspiegels getrennt steuerbar sind.

22. Vorrichtung nach einem der Ansprüche 16 bis 21, bei der das Mittel (50) zur Positionierung der Heizvorrichtung (48) einen Stützarm umfaßt, an dem die Heizvorrichtung schwenkbar angebracht ist.

23. Vorrichtung zur Installation eines Anschlußstücks (14) an einem geformten Behälterliner (10), die folgendes umfaßt:
eine Plattform (32);
einen beweglich an der Plattform angebrachten Montagekopf (34), der zur Stützung des Anschlußstücks (14) und eines Einsatzes (22) ausgeführt ist, wobei der Einsatz ein Mittel (26) zur Ineingriffnahme des Anschlußstückes (14) zu dessen sicherer Befestigung an dem Liner und Verbindung mit diesem in der Nähe des Liners, zum Positionieren des Anschlußstücks an dem Liner und zum Hineinpressen des Einsatzes in den Liner aufweist;
einen Treiber (38), der zur Bewegung des Montagekopfs (34) ausgeführt ist;
einen Heizspiegel (48), der beweglich an der Plattform angebracht ist; und
einen Stützarm (50), an dem der Heizspiegel schwenkbar angebracht ist und der zur Positionierung der Heizvorrichtung zwischen dem Anschlußstück und dem Liner ausgeführt ist.

## Revendications

1. Procédé de fabrication d'une cuve contenant du fluide comportant un raccord, comprenant les étapes suivantes:
formation d'une gaine (10) définissant la cuve;
fourniture d'un raccord préformé (14);
installation d'un insert (22) dans le raccord, l'insert (22) comprenant des moyens (26) agissant sur le raccord afin de fixer solidement le raccord sur la gaine et l'assembler avec celle-ci;
positionnement du raccord (14) sur une paroi (12) de la gaine (10); et
soudage de l'insert (22) à la paroi.

2. Procédé conformément à la revendication 1, comprenant en outre l'étape d'enroulement de filaments sur la gaine (10), lesdits filaments coinçant le raccord contre la paroi.

3. Procédé conformément à la revendication 1 ou 2, comprenant en outre l'étape de découpage d'un trou à travers la paroi (12) de la gaine (10) à l'intérieur du raccord (14) afin de créer un passage à travers le raccord et la paroi de la gaine.

4. Procédé conformément à la revendication 2, dans lequel le raccord (14) définit un passage (18) le traversant, et ledit insert (22) est installé dans le passage.

5. Procédé conformément à la revendication 4, dans lequel l'insert (22) comporte une bride (26) qui coopère avec le raccord (14) afin de retenir le raccord sur la gaine (10).

6. Procédé conformément à la revendication 4 ou 5, dans lequel le passage (18) est placé en communication avec l'intérieur de la gaine (10) à travers le trou.

7. Procédé conformément à la revendication 1, dans lequel l'insert (22) coopère avec le raccord (14) afin de retenir le raccord sur la gaine (10).

8. Procédé conformément à l'une quelconque des revendications précédentes, dans lequel la gaine (10) et l'insert (22) sont constitués de matières présentant des températures de fusion substantiellement similaires, et l'étape de soudage inclut le chauffage d'une région de la gaine et de l'insert à environ la même température.

9. Procédé conformément à l'une quelconque des revendications 1 à 7, dans lequel la gaine (10) et l'insert (22) sont constitués de matières présentant des températures de fusion substantiellement différentes, et l'étape de soudage inclut le chauffage d'une région de la gaine (10) et de l'insert (22) à des températures différentes.

10. Procédé conformément à l'une quelconque des revendications précédentes, dans lequel la gaine (10) et l'insert (22) sont constitués de plastique.

11. Procédé conformément à l'une quelconque des revendications précédentes, dans lequel la gaine (10) est généralement cylindrique.

12. Procédé conformément à la revendication 11, dans lequel le raccord (14) est installé sur une paroi latérale généralement cylindrique (12) de la gaine.

13. Procédé conformément à l'une quelconque des revendications précédentes, dans lequel l'étape de soudage inclut le chauffage de l'insert (22) et d'une région de la gaine (10) et le pressage de l'insert dans la gaine afin de l'assembler avec celle-ci.

14. Procédé de fabrication d'une cuve contenant du fluide comportant un raccord, comprenant les étapes suivantes:
formation d'une gaine (10) définissant la cuve;
fourniture d'un raccord préformé (14) comportant une bride (16);
installation d'un insert (22) présentant une bride (26) dans le raccord (14), ladite bride (26) de l'insert agissant sur le raccord (14);
positionnement du raccord (14) sur une paroi (12) de la gaine (10) et soudage de l'insert (22) à la paroi, la bride (26) de l'insert retenant le raccord afin de fixer solidement le raccord sur la gaine et de l'assembler avec celle-ci;
enroulement de filaments sur la gaine (10), lesdits filaments coinçant la bride (16) du raccord contre la paroi; et
découpage d'un trou à travers la paroi (12) de la gaine (10) à l'intérieur du raccord (14) afin de créer un orifice à travers le raccord.

15. Procédé de fabrication d'une cuve contenant du fluide présentant un orifice, comprenant les étapes suivantes:
moulage par rotation d'une gaine (10) en matière plastique présentant une configuration généralement cylindrique;
fourniture d'un raccord préformé (14) comportant une bride (16) ainsi qu'un passage le traversant;
installation d'un insert (22) de la même matière que la gaine (10) dans le passage du raccord (14), ledit insert comportant une bride (26) agissant sur le raccord;
chauffage de l'insert (22) et d'une région d'une paroi cylindrique (12) de la gaine (10) où le raccord doit être installé afin de ramollir l'insert et la région de la paroi;
placement de la bride (16) du raccord sur la région de la paroi et pressage de l'insert (22) dans la région de manière à assembler l'insert avec la paroi, la bride (26) de l'insert retenant le raccord afin de fixer solidement le raccord sur la gaine et de l'assembler avec celle-ci;
enroulement de filaments sur la gaine, lesdits filaments coinçant la bride (16) du raccord contre la paroi; et
découpage d'un trou à travers la paroi de la gaine (10) à l'intérieur du raccord afin de créer un orifice à travers le raccord.

16. Appareil pour installer un raccord (14) sur une gaine de cuve moulée (10), comprenant
des moyens pour supporter le raccord (14) et un insert (22) à proximité de la gaine;
un dispositif de chauffage (48);
des moyens (50) pour positionner le dispositif de chauffage entre le raccord (14) et la gaine (10) afin de chauffer l'insert (22) ainsi qu'une région de la gaine; et
des moyens (34, 38) pour positionner le raccord (14) sur la gaine et presser l'insert dans la gaine afin de souder l'insert à la gaine, **caractérisé en ce que** l'insert (22) comprend des moyens (26) agissant sur le raccord (14) à fixer solidement le raccord sur la gaine et l'assembler avec celle-ci.

17. Appareil conformément à la revendication 16, comprenant en outre des moyens (54) pour enlever de la matière de la gaine pour mettre l'intérieur de la cuve en communication avec le raccord.

18. Appareil conformément à la revendication 16 ou 17, dans lequel les moyens de support du raccord (14) et de l'insert (22) et les moyens de positionnement du raccord (14) comprennent une tête de montage mobile (34).

19. Appareil conformément à la revendication 18, comprenant en outre un dispositif de commande motorisé (38) pour déplacer la tête de montage (34).

20. Appareil conformément à l'une quelconque des revendications 16 à 19, dans lequel le dispositif de chauffage (48) comprend un miroir adiabatique à deux faces.

21. Appareil conformément à la revendication 20, dans lequel les deux faces du miroir adiabatique peuvent être commandées séparément.

22. Appareil conformément à l'une quelconque des revendications 16 à 21, dans lequel les moyens (50) de positionnement du dispositif de chauffage (48) comprennent un bras de support sur lequel le dispositif de chauffage est monté de façon pivotante.

23. Appareil pour installer un raccord (14) sur une gaine de cuve moulée (10), comprenant:
une plate-forme (32);
une tête de montage (34) montée de façon mobile sur la plate-forme et apte à supporter le raccord (14) ainsi qu'un insert (22), l'insert comprenant des moyens (26) agissant sur le raccord (14) afin de fixer solidement le raccord sur la gaine et l'assembler avec celle-ci, à proximité de la gaine, de positionner le raccord sur la gaine, et de presser l'insert dans la gaine;
un dispositif de commande (38) apte à déplacer la tête de montage (34);
un miroir adiabatique (48) monté de façon mobile sur la plate-forme; et
un bras de support (50) sur lequel le miroir adiabatique est monté de façon pivotante et qui est apte à positionner le dispositif de chauffage entre le raccord et la gaine.
